# EUROPEAN PATENT APPLICATION

(11) **EP 3 357 720 A1**
(43) Date of publication of application: **08.08.2018**
(21) Application number: 18151031.4
(22) Date of filing: 10.01.2018
(51) Int. Cl.: B60G 17/016, B60G 21/073, B60G 21/10, B62K 5/10

(54) **TWO-WHEEL SUSPENSION MECHANISM**

(30) Priority: 07.02.2017 TW 106103874
(71) Applicant: Motive Power Industry Co., Ltd., Dacun Township, Changhua County 515 (TW)
(72) Inventor: CHENG, Hsin-Lin, 515 CHANGHUA COUNTY (TW); TENG, Ching-Chung, 515 CHANGHUA COUNTY (TW)
(74) Representative: Gauchet, Fabien Roland

(57) **Abstract**

A two-wheel suspension mechanism includes a control frame (1) having therein a left channel (11) and a right channel (12); a control valve (2) disposed at the control frame (1) and connected between the left (11) and right channels (12); a left retractable cylinder (3) having a left external-cylinder (31) and a left internal-cylinder (32), with the left external-cylinder (31) pivotally connected to the control frame (1), and the left internal-cylinder (32) retractable into the left external-cylinder (31), defining a left retractable space (311) between the left external-cylinder (31) and the left internal-cylinder (32), allowing the left retractable space (311) to communicate with the left channel (11); a right retractable cylinder (4) having a right external-cylinder (41) and a right internal-cylinder (42), with the right external-cylinder (41) pivotally connected to the control frame (1), and the right internal-cylinder (42) retractable into the right external-cylinder (41), defining a right retractable space (411) between the right external-cylinder (41) and the right internal-cylinder (42), allowing the right retractable space (411) to communicate with the right channel (12).

## Description

### FIELD OF THE INVENTION

The present invention relates to two-wheel suspension mechanisms and, more particularly, to a two-wheel suspension mechanism for controlling how fast a vehicle leans.

### BACKGROUND OF THE INVENTION

When taking a turn, vehicles, whether three-wheel or four-wheel, equipped with conventional two-wheel suspension mechanisms lean to one side equally fast to the detriment of driving safety. When taking a turn slowly, the vehicles will need a large turning circle unless they lean quickly. By contrast, when taking a turn quickly, the vehicles will be likely to end up in a rollover unless they lean slowly.

Accordingly, it is imperative to provide a two-wheel suspension mechanism for controlling how fast the vehicle leans.

### SUMMARY OF THE INVENTION

In view of the aforesaid drawbacks of the prior art, the inventor of the present invention conceived room for improvement in the prior art and thus conducted extensive researches and experiments according to the inventor's years of experience in the related industry, and finally developed a two-wheel suspension mechanism as disclosed in the present invention to control how fast the vehicle leans.

In order to achieve the above and other objectives, the present invention provides a two-wheel suspension mechanism, comprising: a control frame having therein a left channel and a right channel, allowing a liquid to flow along the left channel and the right channel; a control valve disposed at the control frame, connected between the left channel and the right channel, and adapted to control a flow rate of the liquid between the left channel and the right channel; a left retractable cylinder having a left external cylinder and a left internal cylinder, the left external cylinder being pivotally connected to the control frame, and the left internal cylinder being retractable into the left external cylinder and adapted to connect with a left wheel structure, wherein a left retractable space is defined between an inner wall surface of the left external cylinder and a top wall surface of the left internal cylinder, with the left retractable space being in communication with the left channel and adapted to contain the liquid; and a right retractable cylinder having a right external cylinder and a right internal cylinder, the right external cylinder being pivotally connected to the control frame, the right internal cylinder being retractable into the right external cylinder and adapted to connect with a right wheel structure, wherein a right retractable space is defined between an inner wall surface of the right external cylinder and a top wall surface of the right internal cylinder, with the right retractable space being in communication with the right channel and adapted to contain the liquid.

Regarding the two-wheel suspension mechanism, the control frame has at least one liquid feed inlet and at least one vent, the at least one liquid feed inlet being in communication with the left channel or the right channel, and the at least one vent being in communication with the left channel or the right channel.

Regarding the two-wheel suspension mechanism, the control frame has a left pivotal connection chamber and a right pivotal connection chamber, the left external cylinder being pivotally connected to the left pivotal connection chamber, and the right external cylinder being pivotally connected to the right pivotal connection chamber.

Regarding the two-wheel suspension mechanism, the control valve has a servo motor and a rotation valve, the servo motor being connected to the control frame to drive the rotation valve for controlling the flow rate of the liquid between the left channel and the right channel, and the rotation valve being disposed in the control frame and connected between the left channel and the right channel.

The two-wheel suspension mechanism further comprises a vehicular speed sensor, an engine rotation speed sensor or a lean angle sensor, and a processing circuit. The vehicular speed sensor, the engine rotation speed sensor or the lean angle sensor is electrically connected to the servo motor through the processing circuit.

Regarding the two-wheel suspension mechanism, a left longitudinal channel is disposed at a pivotal connection of the left external cylinder and the control frame, allowing the left channel to be in communication with an end of the left longitudinal channel, allowing the left retractable space to be in communication with another end of the left longitudinal channel, and a right longitudinal channel is disposed at a pivotal connection of the right external cylinder and the control frame, allowing the right channel to be in communication with an end of the right longitudinal channel, allowing the right retractable space to be in communication with another end of the right longitudinal channel.

Regarding the two-wheel suspension mechanism, the left internal cylinder is a left damper, and the right internal cylinder is a right damper.

Therefore, the two-wheel suspension mechanism of the present invention controls how fast the vehicle leans.

### BRIEF DESCRIPTION OF THE DRAWINGS

Objectives, features, and advantages of the present invention are hereunder illustrated with specific embodiments in conjunction with the accompanying drawings, in which:
FIG. 1 is a front perspective view of a two-wheel suspension mechanism according to the preferred embodiment of the present invention;
FIG. 2 is a rear perspective view of the two-wheel suspension mechanism according to the preferred embodiment of the present invention;
FIG. 3 is a cross-sectional view of a control frame and a control valve of FIG. 1;
FIG. 4 is a front view with reference to FIG. 3;
FIG. 5 is a cross-sectional view of a left retractable cylinder and a right retractable cylinder of FIG. 2; and
FIG. 6 is a front view with reference to FIG. 5.

### DETAILED DESCRIPTION OF THE PREFERRED EMBODIMENTS

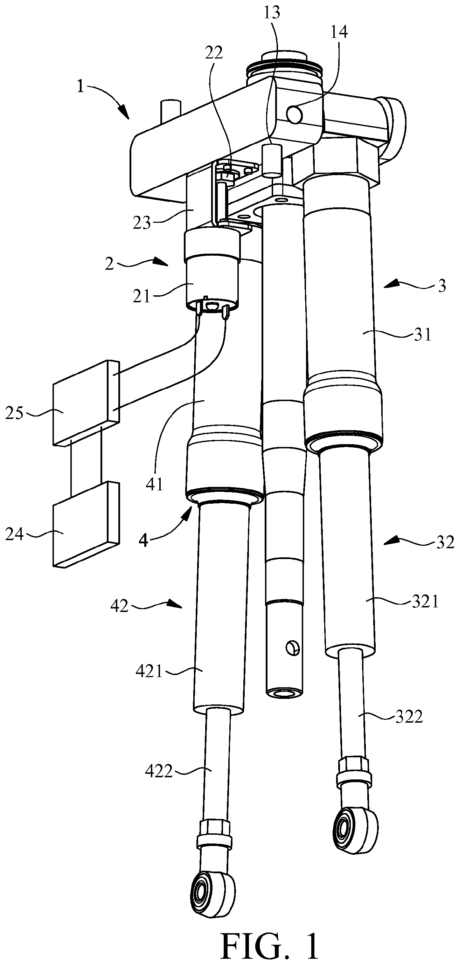

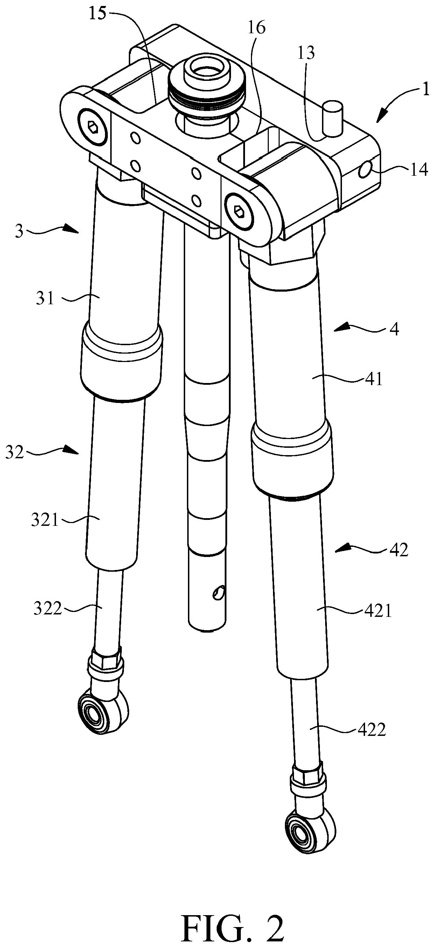

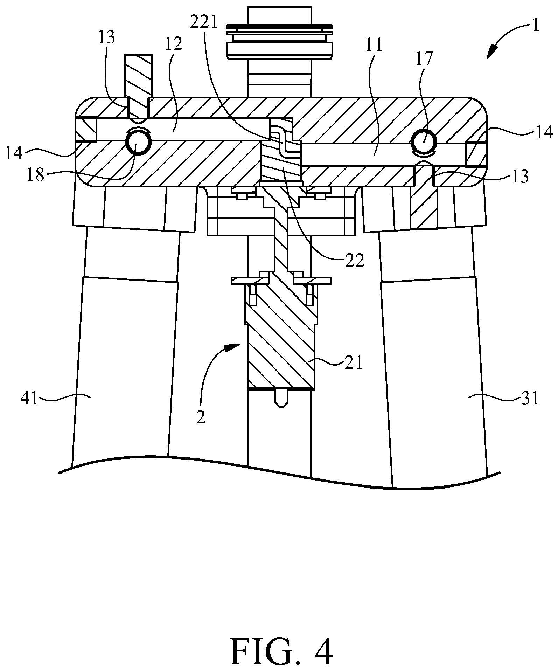

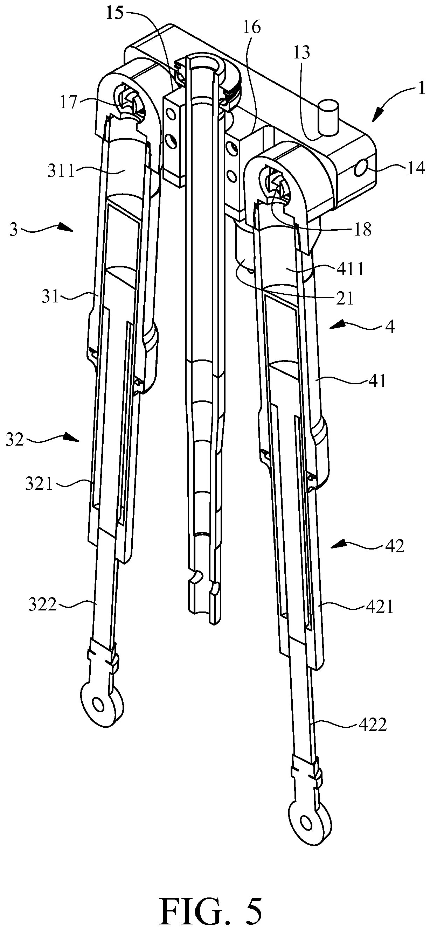

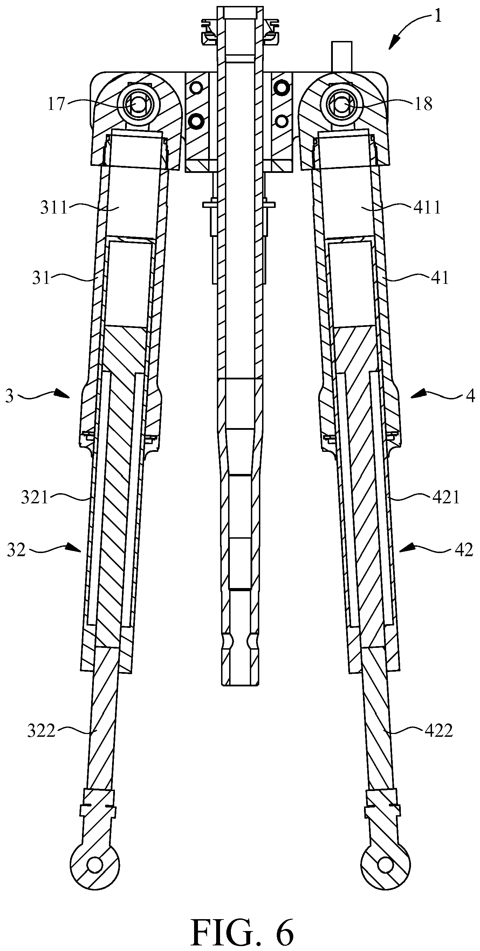

Referring to FIG. 1 through FIG. 6, the present invention provides a two-wheel suspension mechanism which comprises a control frame 1, a control valve 2, a left retractable cylinder 3 and a right retractable cylinder 4. The control frame 1 has therein a left channel 11 and a right channel 12. A liquid (not shown) flows along the left channel 11 and the right channel 12. The control frame 1 is formed with a die by injection molding. The left channel 11 and the right channel 12 are a left transverse channel and a right transverse channel, respectively. The right channel 12 is higher than the left channel 11. The liquid is an oil. The control valve 2 is disposed at the control frame 1 and connected between the left channel 11 and the right channel 12. The control valve 2 controls the flow rate of the liquid between the left channel 11 and the right channel 12. The left retractable cylinder 3 has a left external cylinder 31 and a left internal cylinder 32. The top of the left external cylinder 31 is pivotally connected to the control frame 1 from the left so that the left external cylinder 31 moves leftward and rightward relative to the control frame 1. The top of the left internal cylinder 32 is retractable into the opening at the bottom of the left external cylinder 31. The bottom of the left internal cylinder 32 connects with a left wheel structure (not shown). A left retractable space 311 is defined between the inner wall surface of the left external cylinder 31 and the top wall surface of the left internal cylinder 32. The left retractable space 311 is in communication with the left channel 11 and adapted to contain the liquid. The right retractable cylinder 4 has a right external cylinder 41 and a right internal cylinder 42. The top of the right external cylinder 41 is pivotally connected to the right side of the control frame 1 so that the right external cylinder 41 moves leftward and rightward relative to the control frame 1. The top of the right internal cylinder 42 is retractable into the opening at the bottom of the right external cylinder 41. The bottom of the right internal cylinder 42 connects with a right wheel structure (not shown). A right retractable space 411 is defined between the inner wall surface of the right external cylinder 41 and the top wall surface of the right internal cylinder 42. The right retractable space 411 is in communication with the right channel 12 and adapted to contain the liquid.

Therefore, the two-wheel suspension mechanism of the present invention is characterized in that the control valve 2 controls the flow rate of the liquid going from the left retractable cylinder 3 to the right retractable cylinder 4 through the left channel 11, the control valve 2 and the right channel 12 or controls the flow rate of the liquid going from the right retractable cylinder 4 to the left retractable cylinder 3 through the right channel 12, the control valve 2 and the left channel 11, so as to control how fast the vehicle leans. The more widely the control valve 2 opens, the larger is the flow rate of the liquid, and the more quickly does the vehicle lean. By contrast, the more narrowly the control valve 2 opens, the smaller is the flow rate of the liquid, and the more slowly does the vehicle lean. It is also feasible for the control valve 2 to shut and stop the liquid from flowing, thereby preventing the vehicle from leaning, especially when the vehicle has to be upright. In case of a small lean angle, it is feasible for the control valve 2 to shut and stop the liquid from flowing, thereby preventing the vehicle from leaning further. In case the lean angle is no longer small but increasingly large, the control valve 2 will open so that the liquid will flow, thereby allowing the vehicle to lean.

Referring to FIG. 1, FIG. 3 and FIG. 4, the control frame 1 has at least one liquid feed inlet 13 and at least one vent 14. The at least one liquid feed inlet 13 is in communication with the left channel 11 or the right channel 12. The vent 14 is in communication with the left channel 11 or the right channel 12. Hence, the two-wheel suspension mechanism of the present invention is characterized in that a liquid is admitted through the at least one liquid feed inlet 13 and air is discharged through the vent 14, thereby filling the two-wheel suspension mechanism of the present invention with the liquid. If the control frame 1 has a liquid feed inlet 13 and a vent 14, the control valve 2 opens to introduce the liquid into the two-wheel suspension mechanism of the present invention. Upon completion of the introduction of the liquid and the discharge of air, the liquid feed inlet 13 and the vent 14 are each closed by a blocking element.

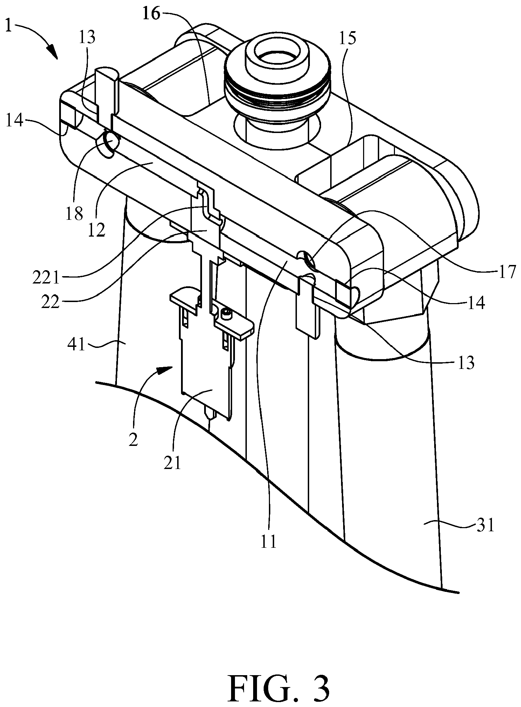

Referring to FIG. 3, the control frame 1 is flanked by a left pivotal connection chamber 15 and a right pivotal connection chamber 16. The top of the left external cylinder 31 is pivotally connected to the left pivotal connection chamber 15. The top of the right external cylinder 41 is pivotally connected to the right pivotal connection chamber 16. Hence, the left retractable cylinder 3 and the right retractable cylinder 4 are pivotally connected to the control frame 1 from the left and from the right, respectively.

Referring to FIG. 1, FIG. 3 and FIG. 4, the control valve 2 has a servo motor 21 and a rotation valve 22. The servo motor 21 is connected to the bottom of the control frame 1 through a U-shaped support 23. The rotation valve 22 is disposed at the control frame 1 and connected between the left channel 11 and the right channel 12. The rotation valve 22 is a two-tier roller and has a leftward and rightward connecting channel 221. The servo motor 21 drives the rotation valve 22 to rotate and thus control the flow rate of the liquid between the left channel 11 and the right channel 12. The larger the cross sections of the left opening and right opening of the leftward and rightward connecting channel 221 in communication with the left channel 11 and the right channel 12 are, the larger is the flow rate of the liquid. The smaller the cross sections of the left opening and right opening of the leftward and rightward connecting channel 221 in communication with the left channel 11 and the right channel 12 are, the smaller is the flow rate of the liquid. The liquid stops flowing as soon as the leftward and rightward connecting channel 211 rotates to open forward and backward.

Referring to FIG. 1, the two-wheel suspension mechanism further comprises a vehicular speed sensor 24 (or an engine rotation speed sensor or a lean angle sensor (such as a gyroscope)) and a processing circuit 25. The vehicular speed sensor 24 (or the engine rotation speed sensor or the lean angle sensor) is electrically connected to the servo motor 21 through the processing circuit 25. Hence, the faster the vehicle moves (or the higher the engine rotation speed is or the smaller the lean angle is), the processing circuit 25 controls the servo motor 21 so that the rotation valve 22 reduces the flow rate of the liquid. By contrast, the slower the vehicle moves (or the lower the engine rotation speed is or the larger the lean angle is), the processing circuit 25 controls the servo motor 21 so that the rotation valve 22 increases the flow rate of the liquid.

Referring to FIG. 3 through FIG. 6, a left longitudinal channel 17 is disposed at the point of pivotal connection of the left external cylinder 31 and the control frame 1. The front end of the left longitudinal channel 17 is in communication with the left channel 11. The rear end of the left longitudinal channel 17 faces downward so as to be in communication with the left retractable space 311. A right longitudinal channel 18 is disposed at the point of pivotal connection of the right external cylinder 41 and the control frame 1. The front end of the right longitudinal channel 18 is in communication with the right channel 12. The rear end of the right longitudinal channel 18 faces downward so as to be in communication with the right retractable space 41. Hence, the left channel 11 and the right channel 12 are in communication with the left retractable space 311 in the left retractable cylinder 3 and the right retractable space 411 in the right retractable cylinder 4 through the left longitudinal channel 17 and the right longitudinal channel 18, respectively.

Referring to FIG. 1, FIG. 2, FIG. 5 and FIG. 6, the left internal cylinder 32 is a left damper, and the right internal cylinder 42 is a right damper. The left damper has a left inner retractable cylinder 321 and a left piston rod 322. The top of the left inner retractable cylinder 321 is retractable into the opening at the bottom of the left external cylinder 31. The left inner retractable cylinder 321 is filled with an oil but is not in communication with the left retractable space 311. The top of the left piston rod 322 is retractable into the opening at the bottom of the left inner retractable cylinder 321. The bottom of the left piston rod 322 connects with the left wheel structure (not shown). The right damper has a right inner retractable cylinder 421 and a right piston rod 422. The top of the right inner retractable cylinder 421 is retractable into the opening at the bottom of the right external cylinder 41. The right inner retractable cylinder 421 is filled with an oil but is not in communication with the right retractable space 411. The top of the right piston rod 422 is retractable into the opening at the bottom of the right inner retractable cylinder 421. The bottom of the right piston rod 422 connects with the right wheel structure (not shown). Hence, the two-wheel suspension mechanism of the present invention not only controls how fast the vehicle leans but also prevents the vehicle from vibrating.

The present invention is disclosed above by preferred embodiments. However, persons skilled in the art should understand that the preferred embodiments are illustrative of the present invention only, but should not be interpreted as restrictive of the scope of the present invention. Hence, all equivalent modifications and replacements made to the aforesaid embodiments should fall within the scope of the present invention. Accordingly, the legal protection for the present invention should be defined by the appended claims.

## Claims

1. A two-wheel suspension mechanism, comprising:
a control frame (1) having therein a left channel (11) and a right channel (12), allowing a liquid to flow along the left channel (11) and the right channel (12);
a control valve (2) disposed at the control frame (1), connected between the left channel (11) and the right channel (12), and adapted to control a flow rate of the liquid between the left channel (11) and the right channel (12);
a left retractable cylinder (3) having a left external cylinder (31) and a left internal cylinder (32), the left external cylinder (31) being pivotally connected to the control frame (1), and the left internal cylinder (32) being retractable into the left external cylinder (31) and adapted to connect with a left wheel structure, wherein a left retractable space (311) is defined between an inner wall surface of the left external cylinder (31) and a top wall surface of the left internal cylinder (32), with the left retractable space (311) being in communication with the left channel (11) and adapted to contain the liquid; and
a right retractable cylinder (4) having a right external cylinder (41) and a right internal cylinder (42), the right external cylinder (41) being pivotally connected to the control frame (1), the right internal cylinder (42) being retractable into the right external cylinder (41) and adapted to connect with a right wheel structure, wherein a right retractable space (411) is defined between an inner wall surface of the right external cylinder (41) and a top wall surface of the right internal cylinder (42), with the right retractable space (411) being in communication with the right channel (12) and adapted to contain the liquid.

2. The two-wheel suspension mechanism of claim 1, wherein the control frame (1) has at least one liquid feed inlet (13) and at least one vent (14), the at least one liquid feed inlet (13) being in communication with one of the left channel (11) and the right channel (12), and the at least one vent (14) being in communication with one of the left channel (11) and the right channel (12)

3. The two-wheel suspension mechanism of claim 1, wherein the control frame (1) has a left pivotal connection chamber (15) and a right pivotal connection chamber (16), the left external cylinder (31) being pivotally connected to the left pivotal connection chamber (15), and the right external cylinder (41) being pivotally connected to the right pivotal connection chamber (16).

4. The two-wheel suspension mechanism of claim 1, wherein the control valve (2) has a servo motor (21) and a rotation valve (22), the servo motor (21) being connected to the control frame (1) to drive the rotation valve (22) for controlling the flow rate of the liquid between the left channel (11) and the right channel (12), and the rotation valve (22) being disposed in the control frame (1) and connected between the left channel (11) and the right channel (12).

5. The two-wheel suspension mechanism of claim 4, further comprising one of a vehicular speed sensor (24), an engine rotation speed sensor and a lean angle sensor and comprising a processing circuit (25), with the servo motor (21) electrically connected to one of the vehicular speed sensor (24), the engine rotation speed sensor and the lean angle sensor through the processing circuit (25).

6. The two-wheel suspension mechanism of claim 1, wherein a left longitudinal channel (17) is disposed at a pivotal connection of the left external cylinder (31) and the control frame (1), allowing the left channel (11) to be in communication with an end of the left longitudinal channel (17), allowing the left retractable space (311) to be in communication with another end of the left longitudinal channel (17), and a right longitudinal channel (18) is disposed at a pivotal connection of the right external cylinder (41) and the control frame (1), allowing the right channel (12) to be in communication with an end of the right longitudinal channel (18), allowing the right retractable space (411) to be in communication with another end of the right longitudinal channel (18).

7. The two-wheel suspension mechanism of claim 1, wherein the left internal cylinder (32) is a left damper, and the right internal cylinder (42) is a right damper.
